**Europäisches Patentamt**

**European Patent Office**

**Office européen des brevets**

(19)

(11) Numéro de publication : **0 656 318 A1**

# (12) DEMANDE DE BREVET EUROPEEN

(21) Numéro de dépôt : **94420329.8**

(22) Date de dépôt : **23.11.94**

(51) Int. Cl.$^6$ : **C01B 39/16,** C09C 1/40, C11D 3/12

(30) Priorité : **25.11.93 FR 9314352**

(43) Date de publication de la demande :
**07.06.95 Bulletin 95/23**

(84) Etats contractants désignés :
**BE DE ES FR GB IE IT NL**

(71) Demandeur : **ALUMINIUM PECHINEY**
**Immeuble Balzac**
**10, place des Vosges**
**La Défense 5**
**F-92400 Courbevoie (FR)**

(72) Inventeur : **Soirat, Arnaud, Résidence**
**l'Ubayette**
**Allée Sainte Madeleine,**
**50 bis cours Gambetta**
**F-13100 Aix-en-Provence (FR)**

(74) Mandataire : **Mougeot, Jean-Claude et al**
**PECHINEY**
**28, rue de Bonnel**
**F-69433 Lyon Cedex 03 (FR)**

(54) **Zéolite A à blancheur controlée, procédé de fabrication et application.**

(57)    L'invention concerne une zéolite A à haute capacité d'échange de cations, à granulométrie réglée et blancheur contrôlée, caractérisée en ce qu'elle contient au moins un additif colorant, soluble ou pouvant se disperser en milieu acide, neutre ou basique, susceptible de modifier dans toute la plage de longueurs d'onde du spectre visible sa coloration en vue d'améliorer de façon durable ses propriétés de blancheur lors de ses applications ultérieures. L'additif colorant est un pigment organique ou minéral ajouté dans la proportion pondérale d'au moins 5 ppm et de préférence de 10 à 50 ppm dans la zéolite A au cours de son élaboration. La quantité prédéterminée d'additif colorant (A1 ou A2) choisi notamment dans le groupe des phtalocyanines ou des dérivés azoïques aromatiques, est introduite de préférence au cours de la phase de cristallisation (2) de la zéolite A ou de la phase de filtration/lavage (3) de cette zéolite dans la mesure où l'additif colorant n'est pas suffisamment stable en milieu sodique concentré.
    La zéolite A ainsi obtenue est particulièrement adaptée pour entrer dans la composition des lessives.

Fig. 1

EP 0 656 318 A1

## DOMAINE TECHNIQUE

La présente invention concerne une zéolite A contenant au moins un additif colorant destiné à améliorer ses caractéristiques de blancheur et par le fait celles des produits finis, comme les lessives, dans la composition desquels elle entre ainsi que son procédé de fabrication.

## ETAT DE LA TECHNIQUE

Les zéolites sont des silicoaluminates alcalins cristallisés présentant des structures minérales complexes qui ont pour formule générale

$$M_{2/n}O \; Al_2O_3 \; y \; SiO_2 \; wH_2O$$

avec

n valence du métal M

$y \geqq 2$

w nombre de molécules d'eau de cristallisation.

Les zéolites existent à l'état naturel et sont connues depuis longtemps pour leurs propriétés d'échangeuses d'ions ainsi que pour leurs propriétés absorbantes. Toutefois l'on préfère utiliser maintenant des zéolites de synthèse très pures et ne présentant qu'une seule structure quand il s'agit de développer une ou plusieurs propriétés bien spécifiques pour une application déterminée, catalyse, dessication et notamment l'absorption sélective sous forme de tamis moléculaire.

C'est ainsi que les zéolites A de formule :

$$Na_2O, \; Al_2O_3, \; 2SiO_2, \; wH_2O$$

(avec w compris entre 2 et 8 et de préférence entre 4 et 5)

sont fabriquées et utilisées comme tamis moléculaire, mais également dans le traitement des eaux comme adoucisseur en raison de leur très forte capacité d'échange vis à vis notamment du calcium et, à un degré moindre, vis à vis du magnésium et du fer et cela en raison de leur structure très microporeuse. C'est toutefois à la suite de la règlementation visant à limiter l'eutrophisation liée aux polyphosphates présents dans les lessives que les zéolites A ont trouvé un nouveau développement important en se substituant au moins partiellement aux polyphosphates dans les lessives, comme séquestrant du calcium et du magnésium de l'eau. Pour être incorporées à une lessive, outre leur capacité d'échange vis à vis du calcium qui doit être supérieure à 112 mg par g de zéolite, les zéolites A doivent également satisfaire à d'autres exigences.

Ainsi, il est essentiel que la répartition granulométrique soit resserrée autour d'un diamètre médian de 2 à 5 micromètres, suffisamment petit pour éviter les rétentions du produit dans les fibres du textile, mais suffisamment grand pour permettre une séparation aisée solide-liquide lors de la fabrication de la zéolite ou lors du traitement ultérieur des eaux résiduaires de lessive.

Pour obtenir une zéolite A présentant ces caractéristiques, on peut faire appel à des procédés dits de conversion d'un composé argileux préexistant tel que la sodalite (WO 91/15427) selon lesquels le silicoaluminate de sodium après dissolution acide est précipité à PH basique sous forme de gel qui cristallise ensuite à PH basique sous forme de zéolite A.

Quand une grande pureté est recherchée, on utilise de préférence des procédés dits de synthèse consistant à précipiter le gel initial à partir des constituants de base : silicate de sodium et aluminate de sodium. Ces opérations sont généralement réalisées en continu avec agitation (FR 2398698) ou sans agitation (EP 0149929) mais il est aussi possible de dissocier la phase de précipitation du gel en continu, de la phase de cristallisation du gel réalisée alors en discontinu (FR 2444005). A noter enfin que, par l'adaptation des conditions de précipitation des zéolites et notamment des zéolites A, on peut régler la taille moyenne des micropores du tamis moléculaire sur 3,4,5 Angströms, d'où les appellations de zéolites 3A,4A,5A..., ce qui accroît notablement les capacités d'absorption sélective d'un produit par rapport à un autre de taille de molécule légèrement différente.

Toutefois aucun document ne fait référence aux caractéristiques de blancheur que doit conserver la zéolite A qui doit en effet être exempte de toute coloration parasite pour ne pas altérer la blancheur du produit final notamment quand il s'agit de lessive.

Pour qualifier les propriétés de blancheur on utilise généralement le système espace-couleur de HUNTER officialisé en 1964 par la Commission Internationale de l'Eclairage. Ce système représente dans l'espace, selon 3 directions perpendiculaires, 3 indices qui mesurent respectivement :

- la variation de blancheur (ou à l'inverse d'opacité) par un coefficient L dont la valeur doit être supérieure à 97 pour les zéolites de lessive par référence à une valeur maximale de 100
- la variation de chromaticité mesurée sur les 2 autres axes de coordonnées respectivement par les coefficients a et b positifs ou négatifs, où a représente le degré de coloration moyen entre le rouge et sa couleur complémentaire verte et doit être dans le cas des zéolites pour lessive compris entre -0,5 et + 0,5 et où b représente le degré de coloration moyen entre le bleu et sa couleur complémentaire jaune et doit être dans le cas présent compris entre -0,5 et +1.

Par ailleurs, il est maintenant bien connu que ces irrégularités de blancheur du produit sont dues en partie à la présence d'impuretés qui absorbent sélectivement certaines longueurs d'onde du spectre de lumière blanche incidente de sorte que le faisceau émergeant de lumière est modifié et prend la couleur complémentaire de la couleur sélectivement absorbée. Ce phénomène d'absorption est particulièrement fréquent pour les longueurs d'onde situées en limite du spectre visible. Ainsi, l'absorption de lumière bleue au voisinage de 4800Å provoque l'apparition de la couleur complémentaire jaune alors qu'à l'autre extrémité du spectre visible l'absorption de lumière rouge au voisinage de 6600Å provoque un verdissement du produit.

Pour satisfaire aux caractéristiques de blancheur exigées par les lessiviers, la zéolite A, quel que soit son mode d'élaboration, doit avoir une grande pureté et être donc préparée à partir de constituants de base contenant le minimum d'impuretés susceptibles d'être entraînées ou de précipiter dans la zéolite. Le fabricant de zéolite A se trouve en effet relativement démuni pour corriger un défaut de blancheur ou l'apparition d'une coloration dans la zéolite A une fois précipitée, du fait qu'il ne peut plus agir sur la pureté même s'il connait ou s'il a pu déterminer la nature de l'impureté à l'origine de cette altération de blancheur. En aucun cas, le traitement hydromécanique des zéolites naturelles pour éliminer les impuretés sources de coloration parasites décrit dans US 4510254 ne peut s'appliquer aux zéolites A pour lessive puisqu'il s'agit d'atteindre un coefficient de blancheur L > 97 donc bien supérieur aux limites de L=90 accessibles avec les zéolites naturelles les mieux épurées. La seule action possible ne peut s'exercer que sur la qualité des produits en amont, c'est-à-dire sur les constituants de base, soit par une sélection plus stricte de ces constituants de base chez le fournisseur, soit par une épuration chimique supplémentaire de ces produits industriels par le fabricant de zéolite lui-même.

Quelle que soit la solution adoptée, les contraintes et les coûts de production de zéolite A se trouvent très fortement majorés.

**PROBLEME POSE**

L'obtention dans des conditions industrielles économiquement viables de zéolites A qui satisfassent notamment aux propriétés de blancheur exigées pour les produits finis, comme les lessives, dans la composition desquelles elles entrent, demeure un problème important à résoudre pour l'homme de métier.

**OBJET DE L'INVENTION**

La présente invention apporte une solution en réalisant à partir de produits industriels comme le trihydrate d'alumine issu du procédé Bayer, donc d'un coût de production relativement peu élevé, une zéolite A dont les caractéristiques de blancheur sont corrigées de façon durable par au moins un additif colorant en fonction des caractéristiques de blancheur ou de coloration désirées pour le produit fini dans la composition duquel elle entre. Par les termes "corrigées de façon durable" il faut comprendre que les caractéristiques obtenues après fixation de l'additif colorant sont conservées dans le temps du fait que ledit additif au même titre que le produit fini présente une bonne résistance au vieillissement accéléré occasionné par les agents extérieurs à l'action desquels il est soumis, comme les radiations solaires ou les variations importantes et brutales de température.

Plus précisément l'invention concerne une zéolite A, à haute capacité d'échange de cations, à granulométrie réglée et blancheur contrôlée, caractérisée en ce qu'elle contient au moins un additif colorant, soluble ou pouvant se disperser en milieu acide, neutre ou basique, susceptible de modifier dans toute la plage de longueurs d'onde du spectre visible sa coloration en vue d'améliorer de façon durable ses propriétés de blancheur lors de ses applications ultérieures.

L'invention a aussi pour objet un procédé de fabrication de cette zéolite A avec son additif colorant, comportant la précipitation à une température n'excédant pas 100°C d'une solution sursaturée d'aluminate de sodium avec une solution de silicate de sodium sous forme d'un gel de silicoaluminate de sodium puis la cristallisation dudit gel, sous forme de zéolite A qui, après filtration et lavage, est séché, alors que le mélange d'eau-mère et d'eau de lavage, après concentration, est recyclé en tête de procédé, caractérisé en ce que au moins lors d'une des étapes de précipitation, de cristallisation, de filtration/lavage et/ou de séchage, on met en contact avec l'un des produits réactionnels ou la zéolite A, au moins un additif colorant, soluble ou pouvant se disperser en milieu acide, neutre ou basique, en quantité prédéterminée x correspondant à une teneur pondérale d'au moins 5 ppm dans la zéolite A cristallisée.

L'invention repose en effet sur le triple constat suivant :

a) Il est possible de modifier et donc d'améliorer au moyen d'un additif colorant les caractéristiques de blancheur d'une zéolite et notamment d'une zéolite A au cours de son élaboration.

b) Cette correction par un additif colorant qui peut se réaliser sur un produit à l'état cristallisé, colloïdal ou dissous est précise et durable au niveau du produit fini si les propriétés optiques adéquates sont évidemment obtenues après élaboration du produit final. Ceci implique le choix d'un additif dont les propriétés optiques ne soient pas trop dégradées dans les conditions d'élaboration du produit final (PH, température) si l'on veut procéder aux ajustements quantitatifs nécessaires sans gros risque d'erreur et dont les produits de dégradation n'aient pas d'effet défavorable sur la blancheur du produit final.

c) Cette correction est sélective, c'est-à-dire qu'elle peut s'appliquer à un paramètre précis de chromaticité tel que défini dans le système de couleur de HUNTER où les coefficients a et b peuvent être corrigés pratiquement indépendamment l'un de l'autre pour réduire sinon annihiler l'effet d'une impureté sur l'un d'eux et cela sans fortement diminuer le coefficient de blancheur L.

Ainsi l'additif colorant, quand il n'est pas soluble dans la liqueur contenant la zéolite A, doit pouvoir se disperser aisément dans cette liqueur afin de former une fine suspension homogène assurant un recouvrement uniforme des particules de zéolite A à l'état cristallisé. La fixation de l'additif colorant à la zéolite est évidement d'autant meilleure que non seulement il recouvre superficiellement la zéolite, mais qu'il pénètre aussi par absorption dans cette zéolite. Cet additif colorant, qui peut être un pigment organique ou minéral, est contenu dans la proportion pondérale d'au moins 5 ppm mais de préférence comprise entre 10 et 50 ppm dans la zéolite. Cet additif est généralement choisi dans le groupe des phtalocyanines, comme la phtalocyanine de cuivre $C_{32}$ $H_{16}$ Cu $N_8$, quand l'on désire compenser l'absorption de la couleur bleue dans la plage de longueur d'onde 4800 $\pm$ 300 Å, c'est-à-dire agir sélectivement sur le coefficient b trop élevé de chromaticité du système de HUNTER qui dans ce cas devra être abaissé dans les limites $-0,5 \leq b \leq +1$.

A l'autre extrémité du spectre, si l'on désire compenser l'absorption de la couleur rouge dans la plage de longueur d'onde 6600 $\pm$ 300 A on utilisera un dérivé azoïque aromatique et plus spécialement le sel de manganèse de l'acide 4 [ (5 chloro - 4 - méthyl 2 sulfophényl) azo ] - 3 - hydroxy - 2 - naphtalène carboxylique de formule $C_{18}$ $H_{13}$ Cl $N_2$ $O_6$ S.Mn. qui permet d'agir sur le coefficient a de chromaticité sans modification importante des autres coefficients L et b du système de HUNTER. Dans ce cas, le coefficient a trop faible devra être augmenté dans les limites $-0,5 \leq a \leq 0,5$.

Il convient à cet égard de remarquer l'incidence sur les caractéristiques de blancheur et de chromaticité de la zéolite A de certaines impuretés résiduelles comme CaO, Fe à l'état d'hematite ou à l'état de goethite, quand elles sont présentes simultanément ou isolément en trop forte quantité (> 300 ppm) dans la zéolite. Ainsi peuvent-elles provoquer une coloration jaunâtre ou verdâtre qu'il convient donc de corriger par fixation sur et/ou dans la zéolite A d'une quantité déterminée d'additif colorant choisi pour avoir un effet correctif à la fois sélectif et durable sur les caractéristiques de blancheur de la zéolite A.

L'invention sera néanmoins mieux comprise à partir de la description détaillée suivante s'appuyant sur la figure 1 représentant le schéma de fabrication en continu de la zéolite A.

## DESCRIPTION

L'invention fait appel à un procédé de fabrication de zéolite A connu dans son principe qui consiste à effectuer un mélange intime d'une solution de silicate de sodium et d'une solution d'aluminate de sodium pour former un gel de silicoaluminate de sodium qui cristallise ensuite par séjour dans les eaux-mères selon la réaction :

$$(2SiO_2, Na_2O) + (x\, Al_2O_3, yNa_2O) + z\, H_2O \longrightarrow Al_2O_3, 2SiO_2, Na_2O, 4,5\, H_2O$$
$$(\text{zéolite A}) + [(x-1)\, Al_2O_3, y\, Na_2O] + (z - 5,5)\, H_2O + 2\, NaOH.$$

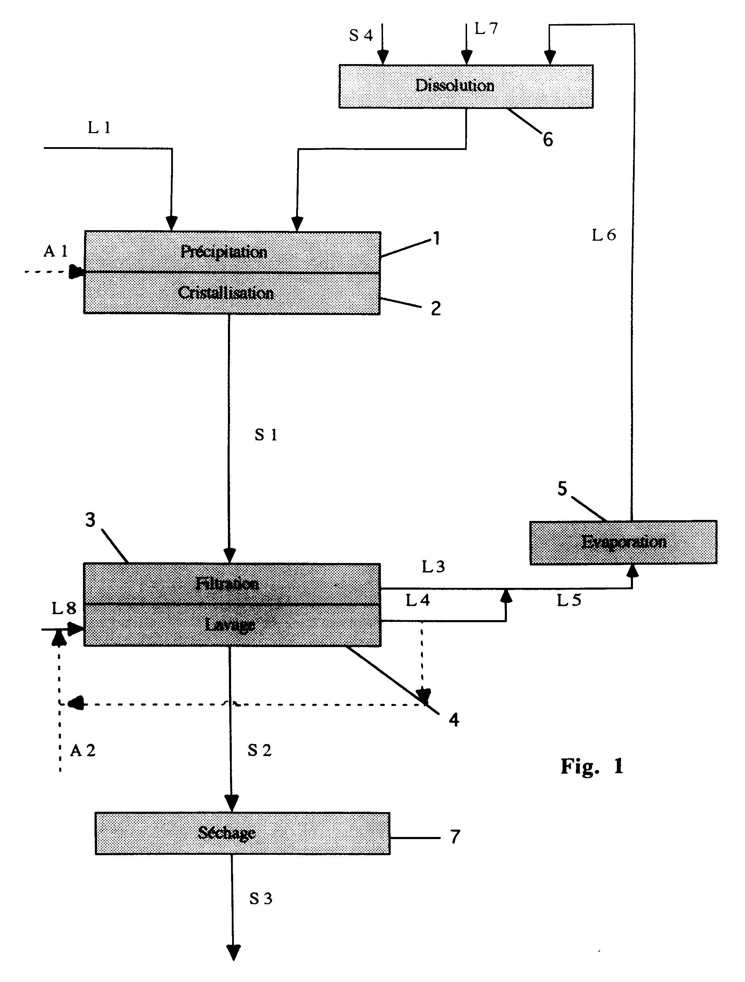

Indépendamment des modes d'apport de l'additif colorant à la zéolite et de détermination des proportions optimales d'additif à utiliser, les contraintes de granulométrie, de pureté et d'homogénéité de structure de la zéolite A à respecter, impliquent la mise en oeuvre de conditions opératoires précises et spécifiques qui sont les suivantes : selon la figure 1, une liqueur Ll de silicate de sodium dont le rapport pondéral $SiO_2$ /$Na_2O$ ou Rp' est compris entre 2 et 3,5 (un rapport Rp' < 2 diminue le pouvoir séquestrant de la zéolite A) et dont la concentration en $SiO_2$ doit être comprise entre 120 et 350 g/l, et de préférence entre 130 et 170 g/l, est introduite dans un réacteur à une température n'excédant pas 100°C et de préférence entre 80° et 100°C pour être mélangée sous forte agitation avec une liqueur L2 d'aluminate de sodium sursaturée de rapport pondéral $Al_2O_3$/$Na_2O$ où Rp est compris entre 0,7 et 1,6 avec une concentration en $Al_2O_3$ comprise entre 60 et 450 g/l. On règle les quantités respectives des liqueurs L1 et L2 mises en contact par le rapport pondéral $Al_2O_3$/$SiO_2$ ou Rp", qui doit être supérieur à 1 et de préférence compris entre 1,1 et 1,9 de manière à ce que toute la silice se combine avec l'alumine pour précipiter et donc que les eaux-mères, en fin de réaction, contiennent uniquement l'aluminate de sodium en excès. Les limites inférieures des concentrations en $SiO_2$ et $Al_2O_3$ respectivement de 120 g/l et 60 g/l dans les liqueurs L1 et L2 ne doivent pas être réduites car une trop forte dilution entraîne le risque de précipitation de structures parasites de zéolites comme les zéolites X et Y.

Pendant toute l'étape 1 de précipitation n'excédant pas 30 min et de préférence comprise entre 5 et 15 min on effectue un brassage efficace pour homogénéiser le plus rapidement possible le mélange des liqueurs L1 et L2 qui précipite sous forme de gel.

Dans l'étape 2 de cristallisation par "mûrissement" de ce gel, réalisée généralement dans le même réacteur à une température supérieure à 70°C et de préférence comprise entre 80°C et 100°C (au-dessous de 70°C la zéolite ne précipite pas sans ajout d'amorce et au-delà de 105°C on risque la précipitation de silicoaluminate de sodium chloré du type sodalite pour peu que la soude utilisée contienne des ions chlorures), on maintient pendant 2 à 16 heures le précipité en suspension par une agitation suffisante. A noter que les temps de précipitation mais surtout de mûrissement dépendent de la température mais aussi de la concentration des 2 solutions initiales. Au cours de l'étape de cristallisation par exemple, on introduit dans la suspension S1 l'additif colorant Al en proportion pondérale prédéterminée de x ppm par rapport au poids de zéolite A cristallisé en suspension avec $x \geqq 5$ ppm et de préférence compris entre 10 et 50 ppm.

A ce stade d'introduction, l'additif choisi pour ses propriétés colorantes correctrices de blancheur et qui peut être soluble ou seulement dispersable comme un pigment dans le milieu réactionnel, ne doit pas être détruit ou neutralisé dans ses effets par ce milieu réactionnel fortement basique à moins que ses produits de dégradation aient un effet favorable sur la blancheur de la zéolite. A cet égard les phtalocyanines et notamment la phtalocyanine de cuivre s'avèrent particulièrement adaptées, à la différence des dérivés azoïques aromatiques stables surtout en milieu acide, neutre ou faiblement alcalin. Avec ce dernier type d'additif colorant, il faut alors effectuer l'introduction dans une étape ultérieure où la zéolite A n'est plus au contact prolongé de ses eaux-mères.

Au terme de l'étape de cristallisation la suspension S1, est filtrée 3 pour séparer la zéolite A cristallisée, des eaux-mères L3 contenant l'aluminate de sodium en excès qui après adjonction des eaux L4 de lavage par l'eau déminéralisée forme une liqueur de filtration L5 qui est concentrée par évaporation 5 jusqu'à une teneur en $Al_2O_3$ sous forme d'aluminate de sodium d'au moins 60 g/litre, puis recyclée selon L6 en tête.

C'est au cours de l'étape 4 de filtration/lavage à l'eau déminéralisée L8 que l'on réalise l'adjonction sur la zéolite A de l'additif colcrant A2 quand il n'est pas suffisamment stable en milieu sodique concentré ou que ses produits de dégradation n'ont pas d'effet favorable sur la blancheur de la zéolite A. L'additif colorant en proportion pondérale prédéterminée x, au moins égale à 5 ppm, et de préférence comprise entre 10 et 50 ppm par rapport à la zéolite A précipitée, en solution ou dispersé sous forme d'une fine suspension dans l'eau déminéralisée L2 est introduit dans l'eau de lavage pour être cyclé à travers le gâteau de zéolite et il suffit de 2 cycles généralement pour que l'additif colorant soit quasi intégralement fixé sur et/ou dans la zéolite A. Les quantités d'additif colorant utilisées dans ce dernier mode d'adjonction sont similaires à celles utilisées quand l'adjonction s'effectue à l'étape de cristallisation et sont donc de préférence comprises entre 10 et 50 ppm.

Une autre possibilité d'introduction de l'additif colorant en solution ou dispersé sous forme d'une fine suspension dans l'eau déminéralisée consiste à le pulvériser sur le gâteau de zéolite A filtrée et essorée avant séchage.

La bonne fixation de l'additif sur et/ou dans la zéolite est contrôlée en spectrométrie UV - Visible par comparaison de la courbe d'absorption de la liqueur de filtration L5 d'une zéolite avec son additif colorant, à celle d'une liqueur de filtration d'une zéolite A sans additif colorant et faisant office de liqueur témoin. On constate que les courbes d'absorption sont identiques ou très similaires quel que soit l'additif colorant mis en oeuvre et quelle que soit l'étape d'introduction (cristallisation ou filtration/lavage), ce qui tend à prouver que l'additif colorant est quasiment entièrement fixé par la zéolite.

La zéolite A avec son additif colorant après séchage entre 70°C et 100°C est alors prête à l'emploi.

Si, avec certains additifs, on observe un très léger entraînement de la quantité d'additif introduite, il est aisé de compenser cette perte par l'introduction d'une quantité excédentaire d'additif correspondant à cette perte. Lors du recyclage de la liqueur L5 contenant donc cette faible quantité d'additif non fixé, 2 cas peuvent se présenter lors de l'évaporation effectuée généralement aux environs de 100-110°C sur une liqueur faiblement basique :

- soit l'additif colorant instable en milieu sodique plus ou moins concentré a été détruit et la compensation est réalisée à chaque cycle par l'introduction d'une quantité excédentaire d'additif (cas de certains dérivés monoazoïques aromatiques)
- soit l'additif colorant est peu ou non dégradé et il est alors recyclé en conservant ses propriétés colorantes (cas des phtalocyanines) en tête de procédé avec la liqueur L6 d'aluminate de sodium concentré. Dans ce cas la quantité d'additif colorant à introduire au cours de l'étape de cristallisation est modulée en fonction de la quantité d'additif recyclée de telle sorte que la quantité totale d'additif présente lors de l'étape de cristallisation soit au moins égale à la quantité à fixer majorée des pertes par entraînement connues.

Pour décrire complètement le procédé, il reste à préciser un mode de prédétermination de la quantité optimale d'additif colorant à introduire sur la zéolite A cristallisée pour obtenir les meilleures caractéristiques de blancheur mesurées par les coefficients L, a et b du système HUNTER. A cet égard, on a procédé de la façon suivante :

A partir d'un lot de trihydrate d'alumine contenant notamment :

| $Na_2O$ : | 920 ppm | C. oxalique : | 40 ppm |
|---|---|---|---|
| $SiO_2$ : | 30 ppm | $Ga_2O_3$ : | 90 ppm |
| $Fe_2O_3$ : | 165 ppm (hématite) | ZnO : | 90 ppm |
| CaO : | 105 ppm | | |

on a préparé par dissolution dans la soude épurée une solution d'aluminate de sodium de composition :

| $Al_2O_3$ : | 200 g/l |
|---|---|
| $Na_2O$ caust. : | 180 g/l |
| Rp : | 1,11. |

7 échantillons de 100 ml de cette liqueur ont été respectivement mis en contact sous agitation mécanique vigoureuse (650 t/mm) dans un réacteur à double enveloppe thermostatée par de l'eau à 82°C avec 7 échantillons de 110 ml d'une solution de silicate de sodium de composition :

| $Na_2O_3$ caust. : | 50 g/l |
|---|---|
| $SiO_2$ : | 165 g/l |
| Rp' : | 3,3. |

Lors du mélange, le rapport pondéral Rp" des concentrations $Al_2O_3$ g/l / $SiO_2$ g/l était de 200 x 0,1 / 165 x 0,11 soit Rp" = 1,1.

Après 10 minutes d'agitation intense des 7 mélanges, repérés de Z1 à Z7, pour homogénéiser le gel formé, on a laissé cristalliser ce gel pendant 2,5 heures à 80°C sous une agitation suffisante pour maintenir les cristaux en suspension. On a introduit dans les 4 mélanges repérés Z2, Z3, Z4, Z5, 30 min avant la fin de l'étape de cristallisation, respectivement par rapport au poids de matière solide en suspension : 10, 20, 30 et 50 ppm de phtalocyanine de cuivre. Les 7 mélanges Z1 à Z7 formant alors 7 suspensions de zéolite A cristallisée dans ses eaux-mères ont été filtrés sur buchner avec verre fritté de porosité 4, suivie d'un lavage de cristaux par 100 ml d'eau permutée chaude versée en 5 fractions de 20 ml. Les dernières fractions de 20 ml d'eau de lavage des échantillons Z6 et Z7 contenant respectivement 10 et 50 ppm de phtalocyanine de cuivre rapportées au poids de zéolite A cristallisé ont été recueillies séparément et réutilisées une seconde fois comme eau de lavage pour assurer une bonne fixation de l'additif colorant, avant d'être réunies aux 4 premières fractions. On a recueilli ainsi pour chaque échantillon 200 ml environ d'une liqueur de filtration (liqueur mère + eau de lavage) de composition moyenne :

| $Al_2O_3$ : | 20 g/l |
|---|---|
| $Na_2O$ : | 60 g/l |
| $SiO_2$ : | non détecté. |

On a constaté d'une part que les 7 liqueurs mères ne comportaient pas de silice solubilisée donc que toute la silice était combinée dans la zéolite, d'autre part que les liqueurs mères des échantillons Z2 à Z7 ne comportaient pas de trace d'additif colorant, donc que celui-ci était intégralement fixé sur la zéolite.

Après séchage des cristaux de silicoaluminate pendant 12 heures à 80°C les 7 échantillons de zéolite Z1 à Z7 d'un poids d'environ 55 g avaient la composition pondérale moyenne d'une zéolite A à savoir :

| Al$_2$O$_3$ | 29 à 30 % | Na$_2$O | 15 à 16% |
|-------------|-----------|---------|----------|
| SiO$_2$ | 34 à 35 % | H$_2$O | 19 à 20%. |

Le spectre de rayons X sur les 7 échantillons a confirmé l'existence d'une structure de zéolite A exempte de zéolite X ou Y et de sodalite. Par ailleurs les résultats des mesures de blancheur et de coloration par spectrocolorimétrie à partir d'une source lumineuse, avec BaSO$_4$ comme référence externe, sont consignés dans le Tableau 1 ci-après avec les diamètres moyens D50 déterminés à partir des répartitions granulométriques mesurées par granulométrie laser.

TABLEAU 1

| Référence zéolite | Etape d'ajout additif colorant | Teneur ppm/zéolite | Blancheur colorat. | | | Diamètre moyen µm D/50 |
|-------------------|-------------------------------|--------------------|------|------|------|------------------------|
| | | | L | a | b | |
| Z1 | Néant | 0 | 98,4 | -0,03 | 1,31 | 3,77 |
| Z2 | Cristallisation | 10 | 97,7 | -0,34 | 0,59 | 3,31 |
| Z3 | Cristallisation | 20 | 97,9 | -0,39 | 0,27 | 3,65 |
| Z4 | Cristallisation | 30 | 97,4 | -0,46 | -0,11 | 3,86 |
| Z5 | Cristallisation | 50 | 96,6 | -0,90 | -1,13 | 3,61 |
| Z6 | Filtration/ Lavage | 10 | 97,5 | -0,32 | 0,61 | 3,54 |
| Z7 | Filtration/ Lavage | 50 | 96,7 | -0,88 | -1,07 | 3,68 |

Ces résultats permettent les commentaires suivants :

Les granulométries moyennes des 7 échantillons sont très voisines et confirment les similitudes de composition et de structure déterminée aux Rayons X. En revanche on remarque des différences notables dans les caractéristiques de blancheur et de chromaticité. Ainsi sur les 4 zéolites Z2 à Z5 où l'addition de phtalocyanine de cuivre a été effectuée sur la zéolite cristallisée, on observe une légère diminution du coefficient L de blancheur qui reste tout à fait acceptable c'est-à-dire supérieur à 97 pour des ajouts inférieurs à 50 ppm. Il en est de même pour le coefficient a qui diminue mais reste acceptable pour des ajouts n'excédant pas 30 ppm (-0,5 ≦ a ≦ 0,5). Simultanément le coefficient b qui en l'absence d'ajout (Z1) dépasse nettement 1 traduisant une absorption excessive de la plage des longueurs d'onde situées dans les bleus, est abaissé significativement entre 0,6 et 0 (valeurs tout à fait acceptables (-0,5 ≦ b ≦ 1)) que l'on n'a pas pu obtenir avec les zéolites A sans additif, même quand elles sont purifiées.

Pour les zéolites Z6 à Z7 où l'addition de phtalocyanine de cuivre a été effectuée lors de l'étape de filtration/lavage on n'observe pas, à teneur identique en additif, de différences significatives dans l'évolution des caractéristiques de blancheur par rapport à celles constatées lorsque l'additif stable en milieu sodique concentré est introduit lors de la cristallisation. On peut enfin déduire dans le cas présent qu'une teneur de x=20 ppm de phtalocyanine de cuivre paraît la plus adaptée pour corriger le coefficient b sans modifier notablement les 2 autres coefficients a et L d'une zéolite A préparée sans additif colorant à partir d'un trihydrate d'alumine standard conformément à l'échantillon Z1.

## AVANTAGE DECOULANT DE L'INVENTION

La possibilité d'améliorer les caractéristiques de blancheur du produit fini, notamment de la lessive dans la composition de laquelle entre la zéolite A, par le simple ajout d'au moins un additif colorant à la zéolite A en cours d'élaboration constitue un avantage économique très important en terme de coût mais aussi de souplesse d'exploitation par rapport aux produits réalisés selon l'art antérieur.

Cela implique toutefois de bien connaître les conditions d'élaboration et d'utilisation du produit final pour choisir l'additif colorant approprié à la correction sélective recherchée qui, même après une dégradation par-

7

tielle lors de l'élaboration du produit final, conservera à celui-ci lors de son utilisation ultérieure les propriétés optiques adéquates.

**Revendications**

1. Zéolite A à haute capacité d'échange de cations, à granulométrie réglée et blancheur contrôlée, caractérisée en ce qu'elle contient au moins un additif colorant, soluble ou pouvant se disperser en milieu acide, neutre ou basique, susceptible de modifier dans toute la plage de longueurs d'onde du spectre visible sa coloration en vue d'améliorer de façon durable ses propriétés de blancheur lors de ses applications ultérieures.

2. Zéolite A selon la revendication 1 caractérisée en ce que l'additif colorant est un pigment organique ou minéral.

3. Zéolite A selon la revendication 1 ou 2 caractérisée en ce qu'elle contient une proportion pondérale d'au moins 5 ppm et de préférence 10 à 50 ppm d'additif colorant.

4. Zéolite A selon l'une quelconque des revendications 1 à 3 caractérisée en ce que l'additif colorant est choisi dans le groupe des phtalocyanines.

5. Zéolite A selon la revendication 4 caractérisée en ce que l'additif colorant est la phtalocyanine de cuivre $C_{32} H_{16} Cu N_8$.

6. Zéolite A selon l'une quelconque des revendications 1 à 3 caractérisée en ce que l'additif colorant est choisi dans le groupe des dérivés azoïques aromatiques.

7. Zéolite A selon la revendication 6 caractérisée en ce que l'additif colorant est le sel de manganèse de l'acide 4 - [ (5 chloro - 4 - méthyl - 2 sulfophényl) azo ] - 3 - hydroxy - 2 - naphtamène carboxylique de formule chimique $C_{18} H_{13} ClN_2O_6$ S. Mn.

8. Procédé de fabrication de zéolite A à forte capacité d'échange de cations, à granulométrie réglée et à blancheur contrôlée comportant la précipitation à une température $\leqq 100°C$ d'une solution sursaturée d'aluminate de sodium avec une solution de silicate de sodium sous forme d'un gel de silicoaluminate de sodium puis la cristallisation dudit gel sous forme de zéolite A qui, après filtration et lavage, est séché alors que le mélange d'eau-mère et d'eau de lavage après concentration est recyclé en tête de procédé caractérisé en ce qu'au moins lors d'une des étapes de précipitation, de cristallisation, de filtration/lavage et/ou de séchage, on met en contact avec l'un des produits réactionnels ou la zéolite A, au moins un additif colorant, soluble ou pouvant se disperser en milieu acide, neutre ou basique, en quantité prédéterminée x correspondant à une teneur pondérale d'au moins 5 ppm dans la zéolite A cristallisée.

9. Procédé selon la revendication 8 caractérisé en ce que la température de précipitation du gel de silicoaluminate de sodium est comprise entre 80°C et 100°C.

10. Procédé selon la revendication 8 ou 9 caractérisé en ce que dans la solution sursaturée d'aluminate de sodium, le rapport Rp de concentration $Al_2O_3$ g/litre/$Na_2O$ caustique g/litre est compris entre 0,7 et 1,6 avec une concentration en $Al_2O_3$ comprise entre 60 et 450 g/l.

11. Procédé selon la revendication 8 ou 9 caractérisé en ce que dans la solution de silicate de sodium, le rapport Rp' des concentrations $SiO_2$ g/l /$Na_2O$ g/l est compris entre 2 et 3,5 et de préférence entre 3 et 3,5 avec une concentration en $SiO_2$ comprise entre 120 et 350 g/l et de préférence entre 130 et 170 g/l.

12. Procédé selon l'une quelconque des revendications 8 à 11 caractérisé en ce que les solutions d'aluminate de sodium et de silicate de sodium sont mélangées dans des proportions telles que le rapport Rp" des concentrations $Al_2O_3$ g/l /$SiO_2$ g/l soit supérieur à 1 et de préférence compris entre 1,1 et 1,9.

13. Procédé selon l'une quelconque des revendications 8 à 12 caractérisé en ce que pendant la précipitation du gel de silicoaluminate de sodium dont la durée est au plus de 30 min et de préférence comprise entre 5 et 15 min on maintient une forte agitation.

**14.** Procédé selon l'une quelconque des revendications 8 à 13 caractérisé en ce que la température de recristallisation du gel est supérieure à 70°C et de préférence comprise entre 80°C et 100°C.

**15.** Procédé selon l'une quelconque des revendications 8 à 14 caractérisé en ce que pendant la cristallisation du gel dont la durée est comprise entre 2 et 16 heures, on maintient une agitation suffisante pour garder le gel en suspension.

**16.** Procédé selon l'une quelconque des revendications 8 à 15 caractérisé en ce qu'au cours de l'étape de cristallisation on met en contact l'additif colorant, s'il est suffisamment stable en milieu fortement basique, avec la zéolite A cristallisée.

**17.** Procédé selon les revendications 8 à 16 caractérisé en ce que l'additif colorant est mis en contact avec la zéolite A en quantité prédéterminée correspondant à une teneur pondérale x comprise de préférence entre 10 et 50 ppm de la zéolite A cristallisée.

**18.** Procédé selon l'une quelconque des revendications 8, 16 ou 17 caractérisé en ce que l'additif colorant est choisi dans le groupe des phtalocyanines.

**19.** Procédé selon l'une quelconque des revendications 8 à 18 caractérisé en ce qu'au terme de l'étape de cristallisation, la suspension de zéolite A dans son eau-mère est filtrée et lavée à l'eau déminéralisée.

**20.** Procédé selon l'une quelconque des revendications 8 à 16 et 19 caractérisé en ce que, dans la mesure où il n'est pas suffisamment stable en milieu sodique concentré, ou que ses produits de dégradation n'ont pas d'effet favorable sur la blancheur de la zéolite produite, l'additif colorant, en proportion pondérale prédéterminée x au moins égale à 5 ppm et de préférence comprise entre 10 et 50 ppm, soluble ou pouvant se disperser sous forme d'une fine suspension dans l'eau déminéralisée, est cyclé avec l'eau de lavage à travers le gâteau de zéolite A.

**21.** Procédé selon la revendication 20 caractérisé en ce que l'additif colorant en solution ou dispersé sous forme d'une fine suspension dans l'eau déminéralisée est pulvérisé sur la zéolite A filtrée et essorée, avant séchage.

**22.** Procédé selon les revendications 20 et 21 caractérisé en ce que l'additif colorant est choisi dans le groupe des dérivés azolques aromatiques.

**23.** Application aux lessives de la zéolite A à forte capacité d'échange de cation, à granulométrie réglée et à blancheur contrôlée selon les revendications 1 à 22.

S 4      L 7

Dissolution

6

L 1

L 6

A 1

Précipitation       1

Cristallisation       2

S 1

5

3

Evaporation

Filtration     L 3

L 8     Lavage     L 4     L 5

4

A 2     S 2

Fig. 1

Séchage       7

S 3

10

**Office européen des brevets**

## RAPPORT DE RECHERCHE EUROPEENNE

Numero de la demande

EP 94 42 0329

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US-A-4 661 164 (N. SEVERINGHAUS) * revendications 1,5 * --- | 1,2,4 | C01B39/16 C09C1/40 C11D3/12 |
| A | FR-A-1 349 961 (SOCIÉTÉ FRANÇAISE DES SILICATES SPÉCIAUX SIFRANCE) --- | | |
| P,A | EP-A-0 588 768 (CIBA-GEIGY) * revendications 1,12 * ----- | 1,2,4 | |

**DOMAINES TECHNIQUES RECHERCHES (Int.Cl.6)**

C01B
C09C
C11D

Le présent rapport a été établi pour toutes les revendications

| Lieu de la recherche | Date d'achèvement de la recherche | Examinateur |
|---|---|---|
| LA HAYE | 30 Janvier 1995 | Van Bellingen, I |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)